# NEUE EUROPÄISCHE PATENTSCHRIFT

(11) **EP 0 961 378 B2**
(45) Veröffentlichungstag und Bekanntmachung des Hinweises auf die Entscheidung über den Einspruch: **18.07.2012**
(45) Hinweis auf die Patenterteilung: 06.08.2003
(21) Anmeldenummer: 99108932.7
(22) Anmeldetag: 05.05.1999
(51) Int. Cl.: H02G 15/007, H02G 3/06, H02G 15/013, H01R 9/05, H01R 13/52

(54) **Kabeleinführung**
Cable entry
Entrée de câble

(30) Priorität: 28.05.1998 DE 19823837; 19.08.1998 DE 19837530
(43) Veröffentlichungstag der Anmeldung: 01.12.1999
(73) Patentinhaber: Harting Electric GmbH & Co. KG, 32339 Espelkamp (DE)
(72) Erfinder: Harting, Dietmar, Dipl.-Kfm., 32339 Espelkamp (DE); Brenner, Achim, Dr., 32312 Lübbecke (DE); Lambrecht, Heinz, Dipl.-Ing., 32312 Lübbecke (DE); Nowacki, Horst, Dipl.-Ing., 32312 Lübbecke (DE); Schreier, Stephan, Dipl.-Ing., 32369 Rahden (DE)
(74) Vertreter: Prinz & Partner

(56) Entgegenhaltungen:
- WO-A1-97/06580
- DE-A- 2 702 610
- US-A- 3 603 912
- US-A- 4 030 742

## Beschreibung

Die Erfindung betrifft eine Kabeleinführung für elektrische und/oder optische Kabel mit mindestens einer elektrischen Ader, wobei die Adern des Kabels mit Kontaktelementen in Axialanschlusstechnik verbunden werden, und wobei eine Druckschraube vorgesehen ist, die mit einem Aufnahmegehäuse verschraubbar ist, und wobei ein durch die Druckschraube betätigbarer Dichteinsatz vorgesehen ist, der einen umlaufenden Absatz aufweist, welcher an einen umlaufenden Absatz in der Druckschraube angepasst ist

Derartige Kabeleinführungen dienen der Zugentlastung und Abdichtung des Kabels. Dabei muss durch die Zugentlastung sichergestellt werden, dass keine axiale Zugbeanspruchung an den Adern, insbesondere an den Anschlussstellen der Adern des Kabels auftritt.

Aus der US 3,603,912 ist ein Schraubanschluss für einen flexiblen Metallschlauch bekannt, durch den elektrische Kabel z.B. in einen als Metallgehäuse ausgebildeten Knotenpunkt geführt werden. Dabei wird eine speziell doppelwandig geformte Buchse über das Ende des flexiblen Metallschlauches gestülpt, auf dem bereits eine Druckschraube und ein Dichtring aufgeschoben sind. Der Dichtring ist an den beiden axialen Seiten mit einer Schräge und einem Absatz versehen, die der Schräge und einem Absatz in der Druckschraube sowie dem Außenring der Buchse entspricht.

Aus der DE 42 30 138 A1 ist eine Kabeleinführung für elektrische Kabel bekannt, wobei die Kabel mit axial kontaktierenden Kontaktelementen verbunden sind und wobei eine Druckschraube vorgesehen ist, die mit einem Aufnahmegehäuse verschraubbar ist, und wobei ein durch die Druckschraube betätigbarer Dichteinsatz vorgesehen ist.

Aus der DE 296 12 407 U1 ist weiterhin eine Kabeleinführung für elektrische Kabel bekannt, bei der eine Druckschraube vorgesehen ist, die mit einem Aufnahmegehäuse verschraubbar ist, und wobei ein durch die Druckschraube betätigbarer Dichteinsatz vorgesehen ist. Bei dieser Kabeleinführung weisen der Dichteinsatz und die Druckschraube einen Absatz auf.

Aus der GB 2 073 508 A ist ferner eine Kabeleinführung für elektrische Kabel bekannt, bei der eine Druckschraube vorgesehen ist, die mit einem Aufnahmegehäuse verschraubbar ist, und wobei ein durch die Druckschraube betätigbarer Dichteinsatz vorgesehen ist. Dabei weist der Dichteinsatz einen Anschlag auf, welcher an einen Absatz in der Druckschraube angepaßt ist und wobei der Dichteinsatz auf dem äußeren Durchmesser der Kabeleinführseite eine Schräge aufweist, welche einer Schräge an der Druckschraube angepaßt ist, wobei der Winkel der Schräge der Druckschraube spitzer in Bezug auf die Längsachse ausgeführt ist.

Daneben ist aus der DE 43 25 420 A1 eine Kabelverschraubung für elektrische Kabel bekannt, bei der ein Gleitring zwischen einer Druckschraube und einem Dichteinsatz vorgesehen ist.

Weiterhin ist aus der DE 196 15 603 A1 eine Kabelverschraubung für elektrische Kabel bekannt, die mit Kontaktringen aus elektrisch leitendem Material zur Kontaktierung mit einem Abschirmgeflecht des Kabels versehen ist.

Die bekannten Kabeleinführungen sind dabei nicht in der Lage axiale Kontaktierungskräfte zu übertragen.

Der Erfindung liegt die Aufgabe zugrunde eine Kabeleinführung der eingangs genannten Art dahingehend auszubilden, dass deren Dichteinsatz neben der Abdichtung und Zugentlastung nach fertiggestellter Kabeleinführung auch axiale Kräfte während der Anschluß- und Kontaktierungsphase überträgt.

Diese Aufgabe wird gelöst, mit einer Kabeleinführung mit den Merkmalen des Anspruchs 1.

Vorteilhafte Ausgestaltungen der Erfindung sind in den Ansprüchen 2 bis 4 angegeben.

Die mit der Erfindung erzielten Vorteile bestehen insbesondere darin, daß das beschriebene Dichtelement, durch die konstruktive Gestaltung, in der Lage ist axiale Kräfte zu übertragen.

Ein Ausführungsbeispiel der Erfindung ist in der Zeichnung dargestellt und wird im folgenden näher erläutert. Es zeigen
- Fig. 1: die Ansicht einer Kabeleinführung, die nicht zur Erfindung gehört,
- Fig. 2: die Ansicht einer erfindungsgemäßen Kabeleinführung mit einem Gleitring,
- Fig. 3: die Ansicht einer modifizierten Kabeleinführung, die nicht zur Erfindung gehört,
- Fig. 4: die Ansicht einer modifizierten erfindungsgemäßen Kabeleinführung für geschirmte Kabel, und
- Fig. 5: die Ansicht einer weiter modifizierten erfindungsgemäßen Kabeleinführung für geschirmte Kabel.

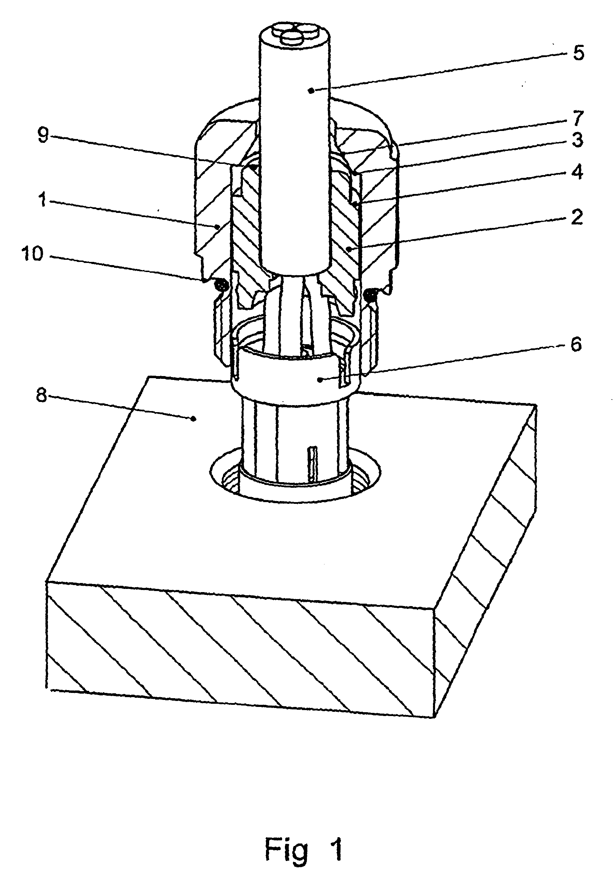

Wie in Fig. 1 dargestellt, wird das Kabel 5 durch die Druckschraube 1 und den Dichteinsatz 2 bis auf eine vorgegebene Tiefe geführt. Dichteinsatz 2 und Spleißring 6 sind miteinander verrastet. Die einzelnen Adern befinden sich in den Leiterführungskanälen des Spleißringes 6. Die Druckschraube 1 weist innen auf der Kabeleinführseite eine vorzugsweise kegelförmige Schräge 7 auf, die beim Einschrauben der Druckschraube in das Gehäuse 8 auf die flexible, kegelförmige Schräge 9 des Dichteinsatzes 2 trifft. Dabei ist der Winkel der kegelförmigen Schräge 7 der Druckschraube spitzer/steiler als der Winkel der kegelförmigen Schräge 9 des Dichteinsatzes in Bezug auf die Längsachse ausgebildet. Der Dichteinsatz 2 wird auf der Kabeleinführseite zusammengedrückt und das Kabel 5 damit abgedichtet.

Beim Verschrauben nähert sich der Absatz 3 der Druckschraube 1 dem Absatz 4 des Dichteinsatzes 2, bis sich beide berühren und die Kraftübertragung von Druckschraube 1 über Dichteinsatz 2 auf den Spleißring 6 einsetzt. Das wird begünstigt, indem der obere Teil des Dichteinsatzes 2 flexibel und der untere Teil für die Kraftübertragung wenig deformierbar ausgelegt ist.

Der Spleißring 6 wird so in axialer Richtung verschoben, wodurch die Schneidklemmen den Leiterführungskanal axial durchsetzen und die Leiter des Kabels 5 kontaktieren.

Die Druckschraube 1 wird in das Gehäuse 8 bis auf den Anschlag 10 eingeschraubt, womit der Spleißring 6 sich in definierter Lage befindet und die Kontaktierung sicherstellt.

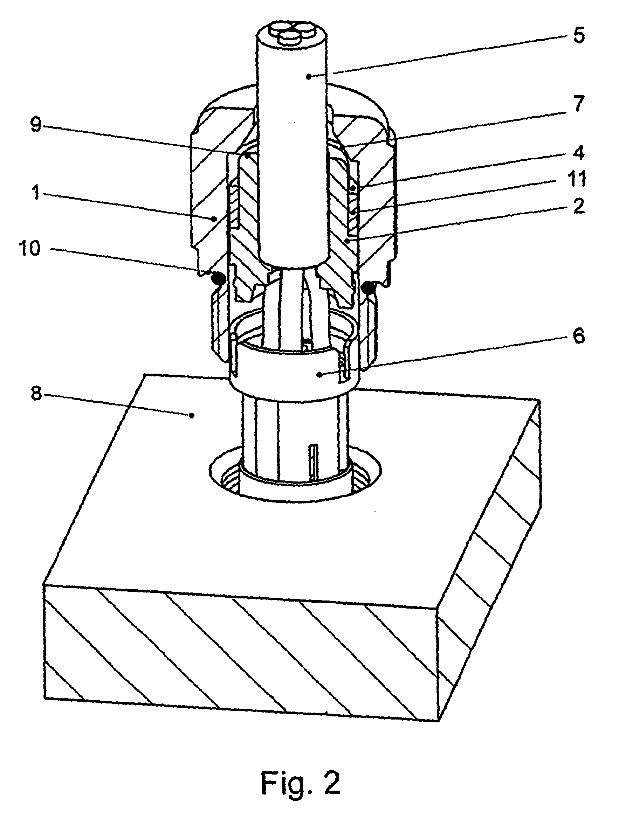

Wie in Fig. 2 dargestellt ist, kann zur Reduzierung der Reibkräfte auf den Dichteinsatz 2 ein Gleitring 11 aufgesetzt werden, welcher in Zusammenhang mit der Druckschraube 1 einen deutlich geringeren Reibungskoeffizienten aufweist. Dabei ist der Gleitring derart angeordnet, daß dessen Oberseite den Absatz 4 des Dichteinsatzes bildet, d. h. die dem Absatz 3 der Druckschraube 1 zugewandte Seite des Gleitringes ist als Absatz 4 ausgebildet.

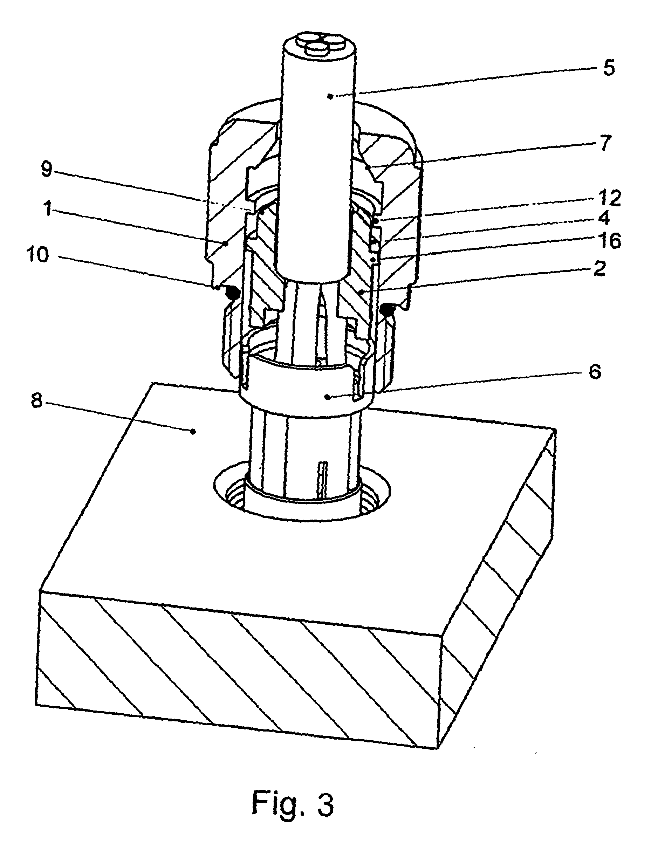

Weiterhin kann die Druckschraube 1 wie in der nicht zur Erfindung gehörenden Fig. 3 ausgeführt sein, wobei ein zusätzlicher ringförmiger Vorsprung 12 in der Druckschraube 1 vorgesehen ist. Dieser druckt beim Einschrauben in das Gehäuse 8 auf einen ringförmigen Vorsprung 16 des Dichteinsatzes 2, wodurch die axiale Verschiebung von Dichteinsatz 2 und Spleißring 6 bis zum Anschlag der Druckschraube 10 im Gehäuse 8 realisiert wird. Dabei ist die zur Kabeleinführseite weisende Fläche des Vorsprungs 16 als Absatz 4 ausgebildet. Beim weiteren Verschrauben wird der Vorsprung 16 des Dichteinsatzes 2 so verformt, daß der zusätzliche Vorsprung 12 der Druckschraube sich am Vorsprung des Dichteinsatzes 2 vorbeibewegen kann. Die Schräge 7 auf der Kabeleinführseite der Druckschraube 1 trifft dabei auf die flexible Schräge 9 des Dichteinsatzes 2, wodurch der Dichteinsatz so zusammengedrückt wird, daß sein innerer Durchmesser verringert wird, und das Kabel 5 außen an der Kabelisolierung abgedichtet wird.

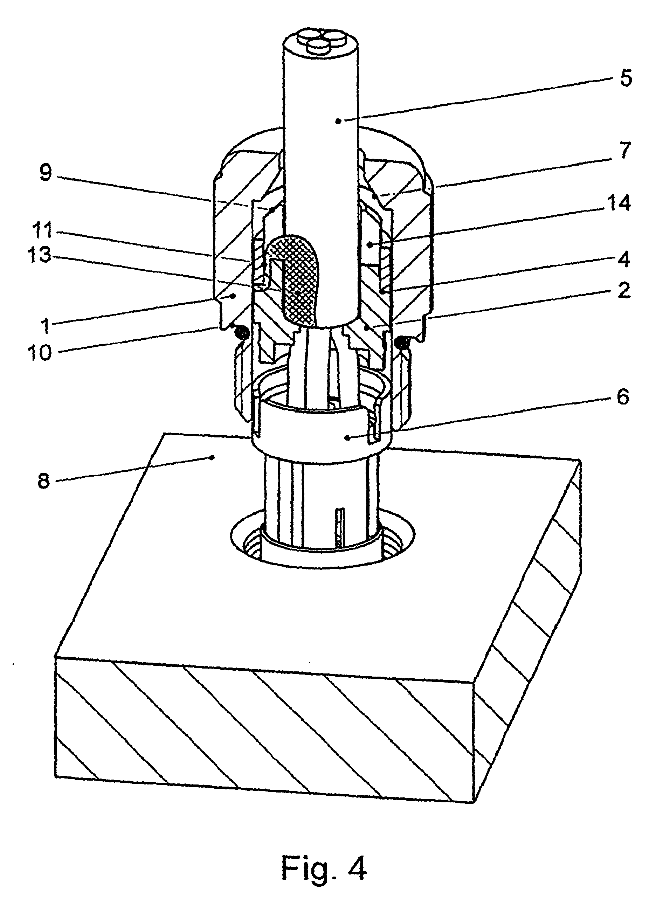

Wie in der Fig. 4 dargestellt, kann der Gleitring 11 auch aus elektrisch leitendem Material ausgeführt werden, was den Vorteil bietet, ein geschirmtes Kabel anzuschließen.
Bei dieser Ausführung liegt das Schirmgeflecht 13 im Inneren des Dichteinsatzes 2 und wird durch den mit einem oder mehreren Schlitzen 14 an der Kabeleinführseite versehenen Dichteinsatz nach außen geführt. Der Gleitring 11 wird über das Kabel 5 und das Schirmgeflecht auf den Dichteinsatz 2 aufgeschoben. Durch das Aufschrauben der Druckschraube 1 wird der elektrische Kontakt zwischen der Druckschraube 1 und dem Schirmgeflecht über den Gleitring 11 hergestellt.

Die Schirmkontaktierung zum Gehäuse 8 erfolgt über das Einschrauben einer elektrisch leitenden Druckschraube 1 in ein elektrisch leitendes Gehäuse oder einen elektrisch leitenden Gewindeeinsatz, über den dann eine elektrische Verbindung zu einem Masseanschluß eines nichtleitenden Kunststoffgehäuses hergestellt wird.

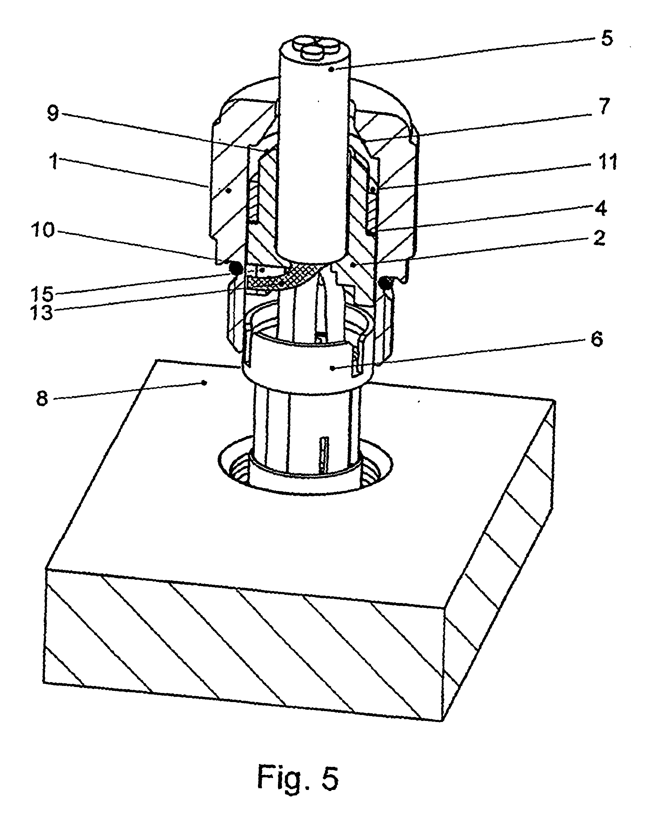

Wie in der Fig. 5 dargestellt, kann der Dichteinsatz 2 auch mit einem oder mehreren Schlitzen 15 an der dem Spleißring 6 zugewandten Seite versehen sein, wobei das Schirmgeflecht 13 dann hierdurch nach außen geführt wird und der elektrische Kontakt mit der Druckschraube 1 durch den Spleißring 6 gewährleistet ist.

Das bei der vorstehend beschriebenen Kabeleinführung verwendete Kabel kann ein elektrisches, ggf. mit einer Abschirmung versehenes Kabel oder auch ein elektro-optisches Kabel (Hybridkabel) sein, wobei letzteres neben optischen Adern mindestens eine elektrische Ader enthält.

## Patentansprüche

1. Kabeleinführung für elektrische und/oder optische Kabel mit mindestens einer elektrischen Ader, mit einem Spleißring (6), wobei die Adern des Kabels mit Kontaktelementen in Axialanschlußtechnik verbunden werden, und wobei eine Druckschraube (1) vorgesehen ist, die mit einem Aufnahmegehäuse (8) verschraubbar ist und einen umlaufenden Absatz (3) aufweist, und wobei ein durch die Druckschraube (1) betätigbarer Dichteinsatz (2) vorgesehen ist, auf den ein Gleitring (11) aufgeschoben ist, wobei die dem Absatz (3) der Druckschraube (1) zugewandte Seite des Gleitringes (11) als umlaufender Absatz (4) ausgebildet ist, welcher an einen umlaufenden Absatz (3) in der Druckschraube (1) angepaßt ist, wodurch während der Anschluß- und Kontaktierungsphase axiale Kräfte auf den Spleißring (6) übertragen werden können, wobei der Dichteinsatz (2) auf dem äußeren Durchmesser der Kabeleinführseite eine kegelförmige Schräge (9) aufweist, welche einer kegelförmigen Schräge (7) an der Druckschraube (1) angepaßt ist, wobei der Winkel der kegelförmigen Schräge (7) der Druckschraube (1) spitzer in Bezug auf die Längsachse ausgeführt ist.

2. Kabeleinführung nach Anspruch 1, **dadurch gekennzeichnet,**
**daß** der Dichteinsatz (2) mindestens einen axialen Schlitz (14) aufweist,
**daß** der Schlitz (14) auf der der Kabeleinführseite zugewandten Seite vorgesehen ist, und
**daß** der Gleitring (11) aus elektrisch leitendem Material besteht.

3. Kabeleinführung nach Anspruch 1, **dadurch gekennzeichnet,**
**daß** der Dichteinsatz (2) mindestens einen axialen Schlitz (15) aufweist, der auf der einem Spleißring (6) zugewandten Seite vorgesehen ist, und
**daß** der Gleitring (11) aus elektrisch leitendem Material besteht.

4. Kabeleinführung nach einem der vorstehenden Ansprüche, **dadurch gekennzeichnet,**
**daß** der Dichteinsatz (2) aus Kunststoffmaterial besteht, und mit einer elektrisch leitenden Oberfläche versehen ist.

## Claims

1. A cable inlet for electrical and/or optical cables having at least one electrical lead, including a splice ring (6), wherein the leads of the cable are connected to contact elements in accordance with the axial termination method and wherein a pressure screw (1) is provided which can be screwed to an accommodating housing (8) and includes a peripheral step (3), and wherein a sealing insert (2) is provided which can be actuated by the pressure screw (1) and onto which a slip ring (11) is slipped, the side of the slip ring (11) facing towards the step (3) of the pressure screw (1) having the form of a peripheral step (4) which is adapted to a peripheral step (3) in the pressure screw (1), whereby axial forces can be transmitted to the splice ring (6) during the connecting and contacting phase, the sealing insert (2) having on the outer diameter of the cable-insertion side a conical bevel (9) which is adapted to a conical bevel (7) on the pressure screw (1), the angle of the conical bevel (7) of the pressure screw (1) being designed to be more acute relative to the longitudinal axis.

2. Cable inlet according to Claim 1, **characterised in that**
the sealing insert (2) has at least one axial slot (14), the slot (14) is provided on the side facing towards the cable-insertion side, and the slip ring (11) consists of electrically conductive material.

3. Cable inlet according to Claim 1, **characterised in that**
the sealing insert (2) has at least one axial slot (15) which is provided on the side facing towards a splice ring (6), and the slip ring (11) consists of electrically conductive material.

4. Cable inlet according to one of the preceding claims, **characterised in that**
the sealing insert (2) consists of plastic material and is provided with an electrically conductive surface.

## Revendications

1. Entrée de câble pour câbles électriques et/ou optiques avec au moins un brin électrique, avec un anneau d'épissure (6), les brins de câble étant assemblés avec des éléments de contact selon la technique de la connexion axiale, et une vis de serrage (1) étant prévu qui peut être vissée dans un boîtier de montage (8) et présentant un étagement (3) continu sur tout le pourtour, et qu'il est prévu un insert d'étanchéité (2) pouvant être actionné par la vis de serrage (1) et sur lequel un anneau de glissement (11) est engagé, la face dudit anneau de glissement (11) orientée vers l'étagement (3) de la vis de serrage (1) présentant une conformation en étagement (4) continu sur tout le pourtour, adapté à un étagement (3) continu sur tout le pourtour de la vis de serrage (1), grâce à quoi des forces axiales peuvent être transmises sur l'anneau d'épissure (6) lors de la phase de connexion et de mise en contact, la surface périphérique extérieure de l'insert d'étanchéité (2) comportant du côté de l'entrée du câble une inclinaison conique (9) adaptée à une inclinaison conique (7) de la vis de serrage (1), l'angle de l'inclinaison conique (7) de la vis de serrage (1) étant plus aigu par référence à l'axe longitudinal.

2. Entrée de câble selon la revendication 1, **caractérisée en ce que**
l'insert d'étanchéité (2) comporte au moins une fente axiale (14),
la fente axiale (14) est ménagée du côté de l'entrée du câble,
l'anneau de glissement (11) est en matériau conducteur électriquement.

3. Entrée de câble selon la revendication 1, **caractérisée en ce que**
l'insert d'étanchéité (2) comporte au moins une fente axiale (15) ménagée du côté de l'anneau d'épissure (6),
l'anneau de glissement (11) est en matériau conducteur électriquement.

4. Entrée de câble selon l'une des revendications précédentes, **caractérisée en ce que**
l'insert d'étanchéité (2) est en matériau synthétique et pourvu d'une surface conductrice électriquement.
